# EUROPÄISCHE PATENTANMELDUNG

(11) **EP 1 251 666 A2**
(43) Veröffentlichungstag der Anmeldung: **23.10.2002**
(21) Anmeldenummer: 02100322.3
(22) Anmeldetag: 02.04.2002
(51) Int. Cl.: H04L 25/02, H04L 25/14

(54) **Vorrichtung und Verfahren zum Ausgleich von Laufzeitschwankungen**

(30) Priorität: 19.04.2001 DE 10119202
(71) Anmelder: SIEMENS AKTIENGESELLSCHAFT, 80333 München (DE)
(72) Erfinder: Müller, Horst, 82069, Hohenschäftlarn (DE)

(57) **Zusammenfassung**

Die Erfindung betrifft ein Verfahren zur zeitlichen Steuerung der Datenübertragung von einem ersten Modul (2a) an ein weiteres Modul (3). Außerdem betrifft die Erfindung ein elektronisches System (1) mit einem ersten Modul (2a), von dem aus Daten über eine Verbindungsleitung (9a) an ein weiteres Modul (3) gesendet werden, welches eine Referenzsignalleitung (7a) aufweist, über welche ein Referenzsignal (Ref1) vom weiteren Modul (3) an das erste Modul (2a) übertragen wird, welches in Abhängigkeit von der zeitlichen Lage der vom weiteren Modul (3) empfangenen Daten in Bezug auf ein vom weiteren Modul (3) empfangenes Taktsignal (T, TR) gewählt ist. Das Referenzsignal (Ref1) weist eine Bitfolge (B) auf, die einer Bitfolge entspricht, die vom weiteren Modul (3) über die Verbindungsleitung (9a) von dem ersten Modul (2a) empfangen wurde.

## Beschreibung

Die Erfindung betrifft ein elektronisches System mit einem ersten Modul, von dem aus Daten über eine Verbindungsleitung an ein weiteres Modul gesendet werden. Außerdem betrifft die Erfindung ein Verfahren zur zeitlichen Steuerung der Datenübertragung von einem ersten Modul an ein weiteres Modul.

Elektronische Systeme mit mehreren elektronischen Modulen, z.B. mit mehreren integrierten Schaltungen, müssen häufig Daten mit einer relativ hohen Geschwindigkeit verarbeiten können. Dies gilt insbesondere für Systeme, die in optischen Nachrichtennetzwerken mit hohen Datenübertragungraten verwendet werden.

Um eine hohe Datenverarbeitungsgeschwindigkeit zu erreichen, kann ein vom System empfangenes Signal in mehrere Teilsignale aufgespalten werden, die in entsprechenden Modulen parallel verarbeitet werden.

Werden die Teilsignale dann von einem Modul aus über mehrere Verbindungsleitungen auf parallele Weise zu einem weiteren Modul übertragen, können die Teilsignale aufgrund z.B. von unterschiedlichen Laufzeiten auf den verschiedenen Verbindungsleitungen zu jeweils unterschiedlichen Zeiten am weiteren Modul ankommen.

Dies gilt insbesondere dann, wenn die Laufzeiten auf den Verbindungsleitungen in der Größenordnung der Taktperiodendauer der übertragenen Datenbits liegen.

Beispielsweise kommt es dann, wenn zwischen zwei verschiedenen Verbindungsleitungen ein Längenunterschied von 10 cm besteht, und eine Taktfrequenz von z.B. 2,5 GHz verwendet wird, zu einem Laufzeitunterschied von ca. 700 ps. Dies entspricht fast zwei Taktperioden.

Die Erfindung hat zur Aufgabe, ein neuartiges Verfahren zur zeitlichen Steuerung der Datenübertragung von einem ersten Modul an ein weiteres Modul, sowie ein neuartiges elektronisches System mit einem ersten Modul, von dem aus Daten über eine Verbindungsleitung an ein weiteres Modul gesendet werden, zur Verfügung zu stellen, daß reduzierte Laufzeitunterschiede hinsichtlich der Datenübertragung aufweist.

Die Erfindung erreicht dieses und weitere Ziele durch die Gegenstände der Ansprüche 1 und 21. Vorteilhafte Weiterbildungen der Erfindung sind in den Unteransprüchen angegeben.

Gemäß der Erfindung wird ein elektronisches System bereitgestellt, mit einem ersten Modul, von dem aus Daten über eine Verbindungsleitung an ein weiteres Modul gesendet werden, dadurch gekennzeichnet, dass das System eine Referenzsignalleitung aufweist, über welche ein Referenzsignal vom weiteren Modul an das erste Modul übertragen wird, welches in Abhängigkeit von der zeitlichen Lage der vom weiteren Modul empfangenen Daten in Bezug auf ein vom weiteren Modul empfangenes Taktsignal gewählt ist.

Vorteilhaft kann dann in Abhängigkeit von dem vom ersten Modul empfangenen Referenzsignal das Senden von Daten durch das erste Modul verzögert, oder beschleunigt werden, so dass die empfangenen Daten im weiteren Modul zu jeweils korrekten Zeitpunkten abgefragt werden können.

Da die Steuerung der Verzögerung bzw. Beschleunigung des Sendens der Übertragungssignale im wesentlichen vom ersten Modul durchgeführt wird, kann das weitere, die Übertragungsdaten empfangende Modul mit relativ geringem schaltungstechnischen Aufwand realisiert werden.

Besonders bevorzugt weist das System zusätzlich zur o.g. Verbindungsleitung eine oder mehrere weitere Verbindungsleitungen auf, über die vom ersten Modul aus auf parallele Weise weitere Daten an das weitere Modul gesendet werden. Vorteilhaft wird das Referenzsignal in Abhängigkeit von der zeitlichen Lage der vom weiteren Modul über die Verbindungsleitung empfangenen Daten, und der vom weiteren Modul über die weitere oder die mehreren weiteren Verbindungsleitungen empfangenen weiteren Daten in Bezug auf das vom weiteren Modul empfangene Taktsignal gewählt.

Wird dann in Abhängigkeit von dem Referenzsignal das Senden von Daten bzw. von weiteren Daten über die Verbindungsleitung bzw. die weitere oder die mehreren weiteren Verbindungsleitungen durch das erste Modul entsprechend verzögert, oder beschleunigt, kann erreicht werden, dass die empfangenen Daten und die empfangenen weiteren Daten im weiteren Modul zu jeweils im wesentlichen gleichen Zeitpunkten abgefragt, und somit Laufzeitschwankungen ausgeglichen werden können.

Im folgenden wird die Erfindung anhand eines Ausführungsbeispiels und der beigefügten Zeichnung näher erläutert. In der Zeichnung zeigt:
- Figur 1: eine schematische Darstellung eines elektronischen Systems gemäß einem Ausführungsbeispiel der vorliegenden Erfindung;
- Figur 2: ein Timing-Diagramm der vom in Figur 1 dargestellten ersten elektronischen Modul gesendeten Übertragungssignale, sowie der von diesem empfangenen Taktsignale;
- Figur 3: ein Timing-Diagramm der vom in Figur 1 dargestellten vierten elektronischen Modul vom ersten elektronischen Modul empfangenen Übertragungssignale;
- Figur 4: ein Timing-Diagramm des vom in Figur 1 dargestellten ersten elektronischen Modul vom vierten elektronischen Modul empfangenen Referenzsignals, sowie der vom ersten elektronischen Modul empfangenen Taktsignale;
- Figur 5: eine vom in Figur 1 dargestellten ersten elektronischen Modul gesendete und abgespeicherte, und eine von diesem empfangene Bitfolge;
- Figur 6: ein Timing-Diagramm der vom in Figur 1 dargestellten vierten elektronischen Modul vom ersten elektronischen Modul empfangenen, bit-verzögerten Übertragungssignale, sowie der vom vierten elektronischen Modul empfangenen Taktsignale;
- Figur 7: ein Timing-Diagramm des vom in Figur 1 dargestellten ersten elektronischen Modul vom vierten elektronischen Modul nach der Bit-Verzögerung der Übertragungssignale empfangenen Referenzsignals;
- Figur 8: eine Detaildarstellung der zeitlichen Lage des vom in Figur 1 dargestellten vierten elektronischen Modul empfangenen Taktsignals in Bezug auf einzelne vom vierten Modul empfangene Bits vor einer Feineinstellung der Übertragungssignal-Verzögerung;
- Figur 9: ein Timing-Diagramm der vom in Figur 1 dargestellten vierten elektronischen Modul vom ersten elektronischen Modul empfangenen Übertragungssignale nach der Feineinstellung der ÜbertragungssignalVerzögerung;
- Figur 10: eine Schaltungsanordnung zur Ermittlung der zeitlichen Lage von Signal-Abfragezeitpunkten in Bezug auf einzelne vom vierten Modul empfangene Bits;
- Figur 11: ein Detaildarstellung der zeitlichen Lage des vom in Figur 1 dargestellten vierten elektronischen Modul empfangenen Taktsignals in Bezug auf einzelne vom vierten Modul empfangene Bits nach der Feineinstellung der Übertragungssignal-Verzögerung.

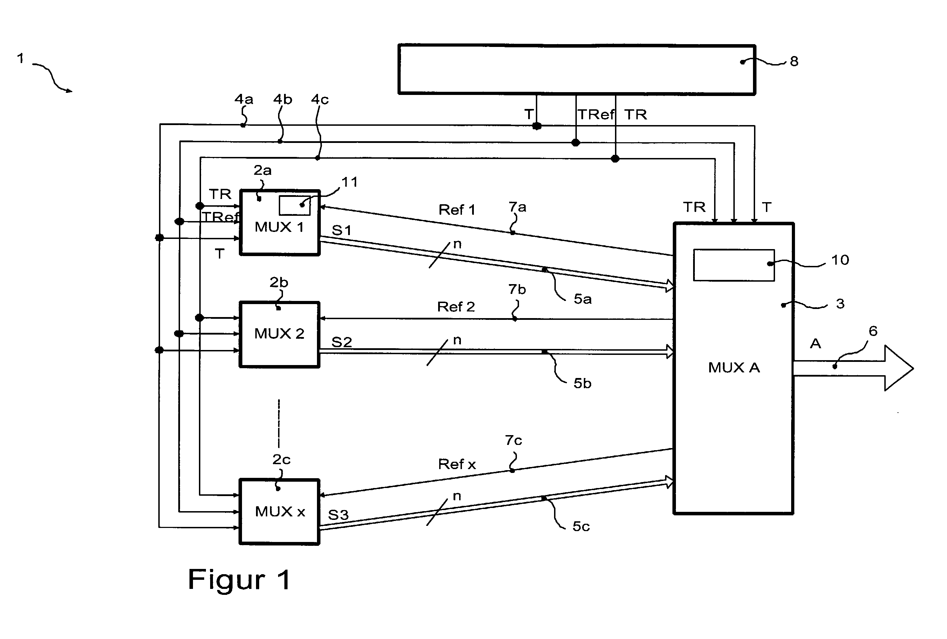

Figur 1 zeigt ein elektronisches System 1, welches ein erstes elektronisches Modul 2a (hier: ein erster integrierter Schaltkreis), ein zweites elektronisches Modul 2b (hier: ein zweiter integrierter Schaltkreis), ein drittes elektronisches Modul 2c (hier: ein dritter integrierter Schaltkreis), ein viertes elektronisches Modul 3 (hier: ein vierter integrierter Schaltkreis, z.B. ein Multiplexer), sowie weitere, hier nicht dargestellte elektronische Module, sowie eine Takterzeugungseinheit 8 aufweist. Sämtliche elektronischen Module 2a, 2b, 2c, 3, sowie die Takterzeugungseinheit 8 sind auf der gleichen Platine (nicht dargestellt) angeordnet.

Demgegenüber sind bei einem alternativen, hier nicht dargestellten Ausführungsbeispiel die elektronischen Module auf verschiedenen Platinen angeordnet. Des weiteren kann eine Zentralplatine vorgesehen sein, die einen oder mehrere Steckplätze aufweist. Die Steckplätze sind mechanisch jeweils so ausgelegt, dass in sie je eine Platine mit einem elektronischen Modul eingesteckt werden kann. Bei diesem Ausführungsbeispiel kann jedes elektronische Modul mehrere integrierte Schaltungen aufweisen, die untereinander bzw. mit integrierten Schaltungen anderer Module über ein oder mehrere Bussysteme kommunizieren. Eine der o.g. Takterzeugungseinheit 8 entsprechende Takterzeugungseinheit kann dann z.B. auf der Zentralplatine, oder auf einer beliebigen anderen Platine angeordnet sein.

Wieder bezogen auf das in Figur 1 gezeigte Ausführungsbeispiel ist die Takterzeugungseinheit 8 über einer erste, zentrale Taktleitung 4a, über eine zweite, zentrale Taktleitung 4b, und über eine dritte, zentrale Taktleitung 4c sowohl mit dem ersten, als auch mit den übrigen elektronischen Modulen 2a, 2b, 2c, 3 verbunden. Des weiteren ist eine erste Verbindungsleitungs-Gruppe 5a vorgesehen, die aus n (hier: n=16) einzelnen Verbindungsleitungen 9a, 9b, ... 9p besteht, über die das erste elektronische Modul 2a mit dem vierten elektronischen Modul 3 verbunden ist. Auf entsprechende Weise sind auch das zweite und das dritte elektronische Modul 2b, 2c, sowie die weiteren, nicht dargestellten Module jeweils über ebenfalls aus n (hier: n=16) einzelnen Leitungen bestehende Verbindungsleitungs-Gruppen 5b, 5c mit dem vierten elektronischen Modul 3 verbunden. In Abhängigkeit von den über die Verbindungsleitungen der einzelnen Verbindungsleitungs-Gruppen 5a, 5b, 5c empfangenen Signale werden von dem vierten elektronischen Modul 3 Ausgabesignale erzeugt, die auf entsprechenden Ausgangsleitungen einer Ausgangssignalleitungs-Gruppe 6 ausgegeben werden.

Wie im folgenden noch näher erläutert wird, weist das erfindungsgemäße System 1 eine erste, eine zweite, eine dritte, sowie weitere, nicht dargestellte Referenzsignalleitungen 7a, 7b, 7c auf, über die das vierte elektronische Modul 3 mit den übrigen elektronischen Modulen 2a, 2b, 2c verbunden ist.

Die Takterzeugungseinheit 8 gibt auf der ersten Taktleitung 4a ein Taktsignal T mit einer Frequenz f_{T} von z.B. 2,5 GHz aus, sowie - entsprechend der Anzahl der in einem Frame enthaltenen Bits/Bytes - auf der dritten Taktleitung 4c ein Rahmentaktsignal TR mit einer Frequenz f_{TR} von z.B. 8 kHz. Des weiteren wird von der Takterzeugungseinheit 8 auf der zweiten Taktleitung 4b ein Referenztaktsignal TREF mit einer Frequenz f_{TREF} von z.B. (n x 8 + n) x f_{TR}, beispielsweise von 1,152 MHz bereitgestellt, welches, wie weiter unten erläutert wird, zur Taktung von von dem vierten elektronischen Modul 3 an die Referenzsignalleitungen 7a, 7b, 7c ausgegebenen Referenzsignalen Ref1, Ref2, Refx dient.

Die elektronischen Module 2a, 2b, 2c, 3 sind in CMOS-Technologie ausgeführt, und dienen z.B. dazu, ein von einem optischen Nachrichtennetzwerk mit einer Rate von z.B. 40 Gbit/s empfangenes Datensignal zu verarbeiten. Um dieserelativ hohe - Verarbeitungsgeschwindigkeit zu ermöglichen, wird das empfangene optische Signal in mehrere, hier: n = 16 elektrische Teilsignale aufgespalten, die in den jeweiligen elektronischen Modulen 2a, 2b, 2c parallel verarbeitet werden.

Beispielsweise werden vom ersten elektronischen Modul 2a verarbeitete Teilsignale in Form eines parallelen Übertragungssignals S1 über die oben erwähnten n = 16 Verbindungsleitungen 9a, 9b, ..., 9p der ersten Verbindungsleitungsgruppe 5a an das vierte elektronische Modul 3 übertragen. Auf ähnliche Weise werden vom zweiten bzw. dritten elektronischen Modul 2b, 2c verarbeitete Teilsignale in Form von parallelen Übertragungssignalen S2, S3 jeweils über die n = 16 Verbindungsleitungen der zweiten bzw. dritten Verbindungsleitungsgruppe 5b, 5c an das vierte elektronische Modul 3 übertragen.

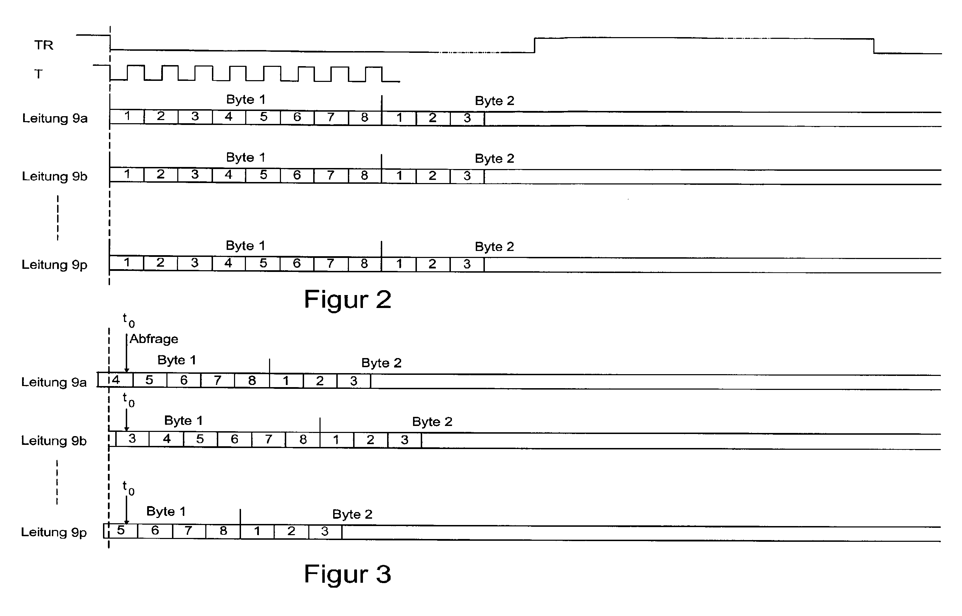

Figur 2 zeigt beispielhaft ein Timing-Diagramm der vom ersten elektronischen Modul 2a auf den Verbindungsleitungen 9a, 9b, ..., 9p der ersten Verbindungsleitungsgruppe 5a ausgegebenen Übertragungssignale. Die Übertragung eines Frames beginnt bei einer negativen Taktflanke des Rahmentaktsignals TR, und endet bei der nächsten negativen Rahmentaktsignalflanke. Jedes Byte eines Frames besteht aus 8 Bit, wobei jedes Bit beginnend mit einer negativen, und endend mit der nächsten negativen Flanke des Taktsignals T übertragen wird.

Wieder bezogen auf Figur 1 weist das erste, zweite und dritte Modul 2a, 2b 2c jeweils eine Speichereinrichtung 11 auf. In dieser werden für jede Verbindungsleitung 9a, 9b, ..., 9p jeweils die ersten acht Bit des jeweils ersten vom jeweiligen Modul 2a, 2b, 2c über die jeweilige Verbindungsleitung 9a, 9b, ..., 9p übertragenen Bytes gespeichert.

In Figur 3 ist beispielhaft dargestellt, wie die auf den Verbindungsleitungen 9a, 9b, ..., 9p der ersten Verbindungsleitungsgruppe 5a vom ersten elektronischen Modul 2a gesendeten Übertragungssignale aufgrund von Laufzeitunterschieden - bezogen auf den Rahmentakt TR - zu jeweils unterschiedlichen Zeiten am vierten Modul 3 ankommen. Die Laufzeitunterschiede können z.B. von unterschiedlichen Signallaufzeiten auf den Verbindungsleitungen 9a, 9b, ..., 9p, von unterschiedlichen Signallaufzeiten in - hier nicht dargestellten - Ausgangsschaltungen des ersten Moduls 2a, sowie von unterschiedlichen Signallaufzeiten in - hier nicht dargestellten - Eingangsschaltungen des vierten Moduls 3 herrühren.

Wie in Figur 3 gezeigt ist, werden die empfangenen Übertragungssignale in dem vierten Modul 3 jeweils zu Zeitpunkten t₀ abgefragt. Die Abfragezeitpunkte t₀ liegen jeweils bei einer positiven Taktflanke des Taktsignals T. Für jede der n = 16 Verbindungsleitungen 9a, 9b, ..., 9p werden die ersten acht, nach der negativen Flanke des Rahmentaktsignals TR empfangenen Bits in einer gemäß Figur 1 im vierten Modul 3 vorgesehenen Speichereinrichtung 10 abgespeichert (beim hier gezeigten Beispiel z.B. gemäß Figur 3 bzgl. der ersten Verbindungsleitung 9a das vierte, fünfte, sechste, siebte und achte Bit (in der Zeichnung mit "4", "5", "6", "7", "8" gekennzeichnet) des ersten Bytes, und die ersten drei Bits ("1", "2", "3") des zweiten Bytes, bzgl. der zweiten Verbindungsleitung 9b das dritte, vierte, fünfte, sechste, siebte und achte Bit ("3", "4", "5", "6", "7", "8") des ersten Bytes, sowie die ersten zwei Bits ("1", "2") des zweiten Bytes, usw.).

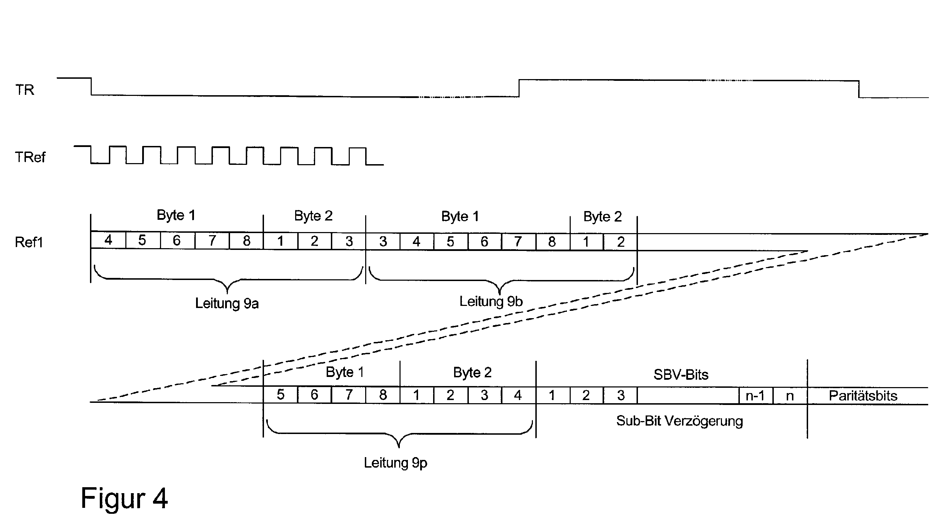

Die gespeicherten Bits werden als serielles Referenzsignal Ref1 über die Referenzsignalleitung 7a an das erste elektronische Modul 2a rückgemeldet, und zwar gemäß Figur 4 zunächst das für die erste Verbindungsleitung 9a gespeicherte vierte, fünfte, sechste, siebte und achte Bit ("4", "5", "6", "7", "8") des ersten Bytes, sowie die ersten drei Bits ("1", "2", "3") des zweiten Bytes, dann die für die zweite Verbindungsleitung 9b gespeicherten Bits, usw.

Im ersten Modul 2a werden für jede Verbindungsleitung 9a, 9b, ..., 9p die in der Speichereinrichtung 11 gespeicherten Bits mit den vom vierten Modul 3 für die entsprechende Verbindungsleitung 9a, 9b, ..., 9p empfangenen Bits verglichen.

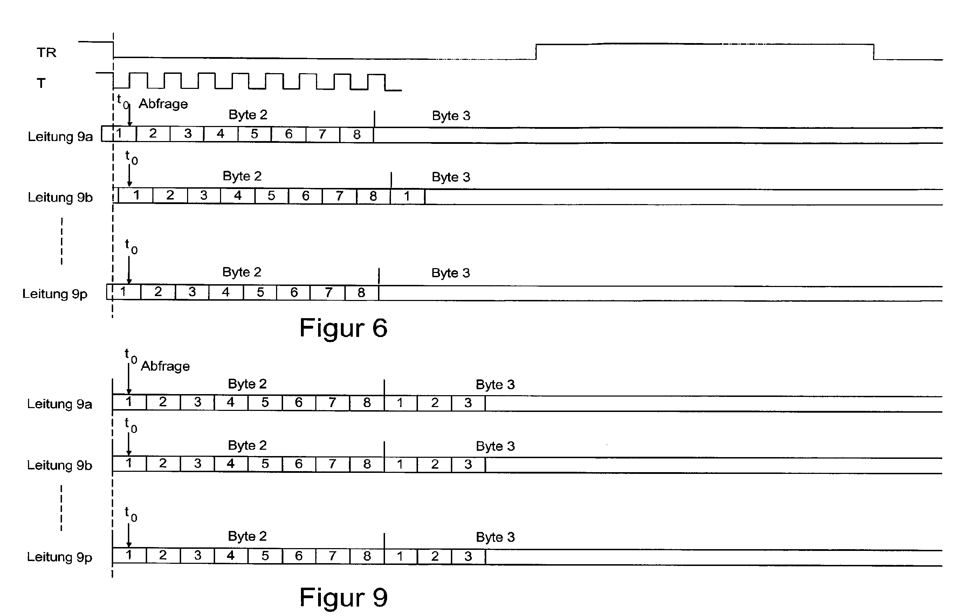

In Figur 5 ist beispielhaft eine für die erste Verbindungsleitung 9a in der Speichereinrichtung 11 gespeicherte Bitfolge A, sowie eine für diese Verbindungsleitung 9a im Referenzsignal Ref1 enthaltene Bitfolge B gezeigt. Die Bits einer am Beginn der Bitfolge B liegenden Teilbitfolge B' sind identisch mit einer - in der Bitfolge A erst nach einer Anfangsbitfolge A_{versch} beginnenden - Teilbitfolge A'. Aus der Bitzahl der Anfangsbitfolge A_{versch} (hier: 3 Bits) kann die insgesamt durch die Verbindungsleitung 9a, sowie die entsprechende Aus- bzw. Eingangsschaltung des ersten bzw. vierten Moduls 2a, 3 hervorgerufene Signalverzögerung mit Bitgenauigkeit ermittelt werden.

Eine entsprechende Gesamt-Signalverzögerungsermittlung wird vom ersten Modul 2a für jede der n = 16 Verbindungsleitungen 9a, 9b, ..., 9p durchgeführt.

Durch Einfügen von für jede der Verbindungsleitungen 9a, 9b, ..., 9p individuell bestimmten, bitweisen Verzögerungen (hier: für die erste Verbindungsleitung 5 Bit, für die zweite Verbingungsleitung 6 Bit, usw.) in die vom ersten Modul 2a ausgegebenen Übertragungssignale wird erreicht, dass gemäß Figur 6 am vierten Modul 3 zu den Abfragezeitpunkten t₀ jeweils für jede Verbindungsleitung 9a, 9b, ..., 9p die gleichen Bits des gleichen Bytes erfasst werden. Auf diese Weise kann eine Grobeinstellung der Abfragezeitpunkte t₀ erreicht werden.

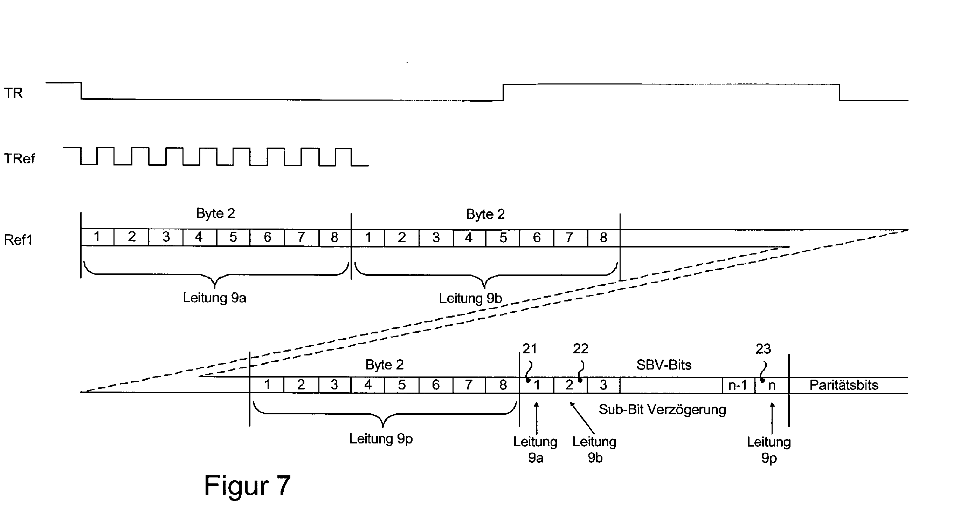

Wie Figur 7 zeigt, werden dann im seriellen Referenzsignal Ref1 über die Referenzsignalleitung 7a vom vierten elektronischen Modul 3 für jede Verbindungsleitung 9a, 9b, ..., 9p jeweils die ersten acht Bits des jeweils zweiten Bytes an das erste elektronische Modul 2a übertragen.

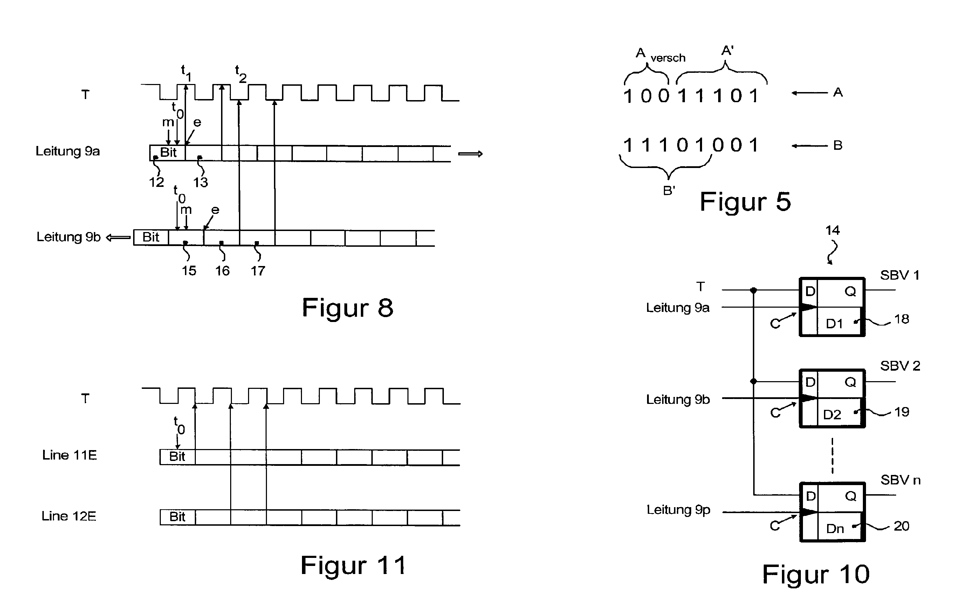

Als nächstes wird eine Feineinstellung der Übertragungssignal-Verzögerung (bzw. -Beschleunigung) durchgeführt: Gemäß Figur 8 liegen die Abfragezeitpunkte t₀ (positive Taktflanke des Taktsignals T) nach der oben beschriebenen Grobeinstellung im allgemeinen nicht genau in der Mitte des jeweils abgefragten Bits (z.B. hinsichtlich der auf der Verbindungsleitung 9a empfangenen Bits 12, 13 etwas zu spät, und hinsichtlich der auf der Verbindungsleitung 9b empfangenen Bits 15, 16, 17 etwas zu früh).

Um die zeitliche Lage des Abtastzeitpunkts t₀ zu korrigieren, wird im vierten Modul 3 überprüft, ob zu Zeitpunkten t₁, t₂ des Wechsels zwischen zwei aufeinanderfolgenden Bits 12, 13 bzw. 15, 16, 17 (bzw. zum Zeitpunkt t₁ bzw. t₂ des Bitendes e des jeweiligen Bits 12 bzw. 15, 16) das Taktsignal T logisch "0", oder logisch "1" ist. Ist das Taktsignal T - wie bei der Leitung 9a - zum Bitwechselzeitpunkt t₁ logisch "1", wird zu spät abgetastet. Ist dagegen - wie bei der Leitung 9b - das Taktsignal T zum Bitwechselzeitpunkt t₂ logisch "0", liegt der Abtastzeitpunkt t₀ zu früh.

In Figur 10 ist eine im vierten Modul 3 vorgesehene Schaltungsanordnung 14 gezeigt, mit welcher ermittelt wird, ob zum Zeitpunkt eines Bitwechsels das Taktsignal T logisch "0" oder logisch "1" ist. Die Schaltungsanordnung 14 enthält eine der Anzahl n = 16 an von dem ersten Modul 2a zum vierten Modul 3 geführten Verbindungsleitungen 9a, 9b, ..., 9p entsprechende Anzahl n = 16 an flankengetriggerten D-Flip-Flops 18, 19, 20. Jedes D-Flip-Flop 18, 19, 20 weist einen Dateneingang D, einen Takteingang C, und einen Datenausgang Q auf. Immer dann, wenn das am Takteingang C anliegende Signal von logisch "1" auf logisch "0" geht, wird das in diesem Augenblick am Dateneingang D anliegende Signal an den Datenausgang Q übertragen, und bis zur nächsten am Takteingang C auftretenden negativen Signalflanke eingefroren.

An die Dateneingänge D der n = 16 D-Flip-Flops 18, 19, 20 wird jeweils das Taktsignal T angelegt. Des weiteren wird dem Takteingang C des ersten D-Flip-Flops 18 das an der ersten Verbindungsleitung 9a anliegende Übertragungssignal, und den Takteingängen C der übrigen D-Flip-Flops 19, 20 das an der dem jeweiligen Flip-Flop 19, 20 zugeordneten Verbindungsleitung 9b, 9p anliegende Übertragungssignal zugeführt.

Demnach ist ein am Datenausgang Q des jeweiligen D-Flip-Flops 18, 19, 20 ausgegebenes Sub-Bit-Verzögerungssignal SBV1, SBV2, SBVn logisch "0", falls das Taktsignal T zum jeweiligen Bitwechselzeitpunkt t_{1,} t₂ logisch "0" ist (Abtastzeitpunkt t₀ zu früh). Falls das Taktsignal T zum jeweiligen Bitwechselzeitpunkt t_{1,} t₂ logisch "1" ist (Abtastzeitpunkt t₀ zu spät), ist das entsprechende Sub-Bit-Verzögerungssignal SBV1, SBV2, SBVn logisch "1".

Je nachdem, ob das der jeweiligen Verbindungsleitung 9a, 9b, ..., 9p zugeordnete Sub-Bit-Verzögerungssignal SBV1, SBV2, SBVn logisch "1" oder logisch "0" ist, wird gemäß Figur 7 in das Referenzsignal Ref1 für jede Verbindungsleitung 9a, 9b, ..., 9p jeweils ein Sub-Bit-Verzögerungs-Bit 21, 22, 23 mit dem Wert "1" oder "0" eingefügt, und an das erste Modul 2a übertragen.

Im ersten Modul 2a werden die empfangenen Sub-Bit-Verzögerungs-Bits 21, 22, 23 ausgewertet. Ist das für eine bestimmte Verbindungsleitung 9a, 9b, ..., 9p empfangene Sub-Bit-Verzögerungs-Bit 21, 22, 23 logisch "1", wird das zugehörige Übertragungssignal "beschleunigt" (d.h. vom ersten Modul 2a etwas früher auf die entsprechende Verbindungsleitung 9a, 9b, ..., 9p gegeben). Demgegenüber wird das jeweilige Übertragungssignal "verzögert" (d.h. etwas später auf die entsprechende Verbindungsleitung 9a, 9b, ..., 9p gegeben), falls das für eine bestimmte Verbindungsleitung 9a, 9b, ..., 9p empfangene Sub-Bit-Verzögerungs-Bit 21, 22, 23 logisch "0" ist.

Dadurch wird erreicht, dass wie in Figur 9, und im Detail in Figur 11 dargestellt ist, im vierten Modul 3 der Abfragezeitpunkt t₀ im wesentlichen genau mittig in Bezug auf das jeweils abgefragte Bit liegt.

Im Referenzsignal Ref1 können gemäß Figur 4 und 7 zusätzlich für jede Verbindungsleitung 9a, 9b, ..., 9p z.B. acht Paritätsbits vorgesehen sein, mit denen auf übliche Weise ermittelt werden kann, ob bzw. wie viele Fehler bei der Übertragung aufgetreten sind. Werden Paritätsbits verwendet, muß die Frequenz f_{TREF} des Referenztaktsignals TREF höher sein, als dann, wenn keine Paritätsbits verwendet werden (z.B. f_{TREF} = (2n x 8 + n) x f_{TR}, z.B. 2,176 MHz, statt f_{TREF} = (n x 8 + n) x f_{TR}, z.B. 1,152 MHz).

Bei der Erfindung kann die Referensignalfrequenz f_{TREF} wesentlich kleiner sein, als Frequenz f_{T}, mit der Daten vom ersten, zweiten und dritten Modul 2a, 2b, 2c zum vierten Modul 3 übertragen werden. Außerdem können die relativ komplexen Steuerungsschaltungen zur Verzögerung bzw. Beschleunigung der Übertragungssignale in den (Sende-)Modulen 2a, 2b, 2c statt im (Empfangs-)Modul 3 vorgesehen sein.

## Patentansprüche

1. Elektronisches System (1) mit einem ersten Modul (2a), von dem aus Daten über eine Verbindungsleitung (9a) an ein weiteres Modul (3) gesendet werden
**dadurch gekennzeichnet, dass**
das elektronische System eine Referenzsignalleitung (7a) aufweist, über welche ein Referenzsignal (Ref1) vom weiteren Modul (3) an das erste Modul (2a) übertragen wird, welches in Abhängigkeit von der zeitlichen Lage der vom weiteren Modul (3) empfangenen Daten in Bezug auf ein vom weiteren Modul (3) empfangenes Taktsignal (T, TR) gewählt ist.

2. Elektronisches System (1) nach Anspruch 1, bei welchem das Referenzsignal (Ref1) eine Bitfolge (B) aufweist, die einer Bitfolge entspricht, die vom weiteren Modul (3) über die Verbindungsleitung (9a) von dem ersten Modul (2a) empfangen wurde.

3. Elektronisches System (1) nach Anspruch 1 oder 2, bei welchem das erste Modul (2a) eine Speichereinrichtung (11) aufweist, in der zumindest teilweise diejenigen Bits gespeichert werden, die vom ersten Modul (2a) an das weitere Modul (3) gesendet werden.

4. Elektronisches System (1) nach einem der vorhergehenden Ansprüche, bei welchem in Abhängigkeit von dem vom ersten Modul (2a) empfangenen Referenzsignal (Ref1) das Senden von Daten durch das erste Modul (2a) verzögert, oder beschleunigt wird.

5. Elektronisches System (1) nach Anspruch 4, bei welchem das Ausmaß der Verzögerung / Beschleunigung des Sendens von Daten dadurch bestimmt wird, dass die in der Speichereinrichtung (11) des ersten Moduls (2a) gespeicherten Bits mit der Bitfolge (B) verglichen werden, die vom weiteren Modul (3) an das erste Modul (2a) gesendet wurde.

6. Elektronisches System (1) nach einem der vorhergehenden Ansprüche, bei welchem eine oder mehrere weitere Verbindungsleitungen (9b, 9c) vorgesehen sind, über die vom ersten Modul (2a) aus auf parallele Weise weitere Daten an das weitere Modul (3) gesendet werden.

7. Elektronisches System (1) nach Anspruch 6, bei welchem das Referenzsignal (Ref1) in Abhängigkeit von der zeitlichen Lage der vom weiteren Modul (3) über die Verbindungsleitung (9a) empfangenen Daten, und der vom weiteren Modul (3) über die weitere Verbindungsleitung (9b) empfangenen weiteren Daten in Bezug auf das vom weiteren Modul (3) empfangene Taktsignal (T, TR) gewählt ist.

8. Elektronisches System (1) nach Anspruch 7, bei welchem das Referenzsignal (Ref1) eine weitere Bitfolge aufweist, die einer Bitfolge entspricht, die vom weiteren Modul (3) über die weitere Verbindungsleitung (9b) von dem ersten Modul (2a) empfangen wurde.

9. Elektronisches System (1) nach Anspruch 8, bei welchem in Abhängigkeit von der weiteren Bitfolge das Senden von weiteren Daten über die weitere Verbindungsleitung (9b) durch das erste Modul (2a) verzögert, oder beschleunigt wird.

10. Elektronisches System (1) nach einem der Ansprüche 4 bis 9, bei welchem die Verzögerung / Beschleunigung des Sendens von Daten durch das erste Modul (2a) in Abhängigkeit von der zeitlichen Lage eines einzelnen von dem weiteren Modul (3) empfangenen Bits (12) in Bezug auf das vom weiteren Modul (3) empfangene Taktsignal (T, TR) gewählt wird.

11. Elektronisches System (1) nach Anspruch 10, bei welchem das Referenzsignal (Ref1) mindestens ein Bit (21) aufweist, mit welchem gekennzeichnet wird, ob das einzelne, von dem weiteren Modul (3) empfangene Bit (12) zu einem vor oder nach dessen Bitmitte (m) liegenden Zeitpunkt (t₀) abgefragt wurde.

12. Elektronisches System (1) nach Anspruch 11, bei welchem das einzelne Bit (12) zu vom Taktsignal (T) definierten Zeitpunkten abgefragt wird.

13. Elektronisches System (1) nach Anspruch 11 oder 12, bei welchem zur Ermittlung, ob das einzelne Bit (12) zu einem vor oder nach der Bitmitte (m) liegenden Zeitpunkt (t₀) abgefragt wurde, der logische Zustand des Taktsignals (T) am Bitende (e) des einzelnen Bits (12) ermittelt wird.

14. Elektronisches System (1) nach einem der vorhergehenden Ansprüche, bei welchem das Referenzsignal (Ref1) zusätzlich Paritätsbits enthält.

15. Elektronisches System (1) nach einem der vorhergehenden Ansprüche, bei welchem das erste und/oder das weitere Modul (2a, 3) eine integrierte Schaltung umfasst.

16. Elektronisches System (1) nach Anspruch 15, bei welchem die integrierte Schaltung in CMOS-Technologie ausgeführt ist.

17. Elektronisches System (1) nach Anspruch 15 oder 16, bei welchem die integrierte Schaltung des weiteren Moduls (3) in einer anderen, insbesondere einer schnelleren Halbleitertechnologie ausgeführt ist, als die integrierte Schaltung des ersten Moduls (2a).

18. Elektronisches System (1) nach einem der vorhergehenden Ansprüche, bei welchem das erste und das weitere Modul (2a, 3) auf der gleichen Platine angeordnet sind.

19. Elektronisches System (1) nach Anspruch 18, bei welchem das erste und das weitere Modul (2a, 3) auf dem gleichen Mikrochip angeordnet sind.

20. Elektronisches System (1) nach einem der Ansprüche 1 bis 17, bei welchem das erste und das weitere Modul (2a, 3) auf verschiedenen Platinen angeordnet sind.

21. Verfahren zur zeitlichen Steuerung der Datenübertragung von einem ersten Modul (2a) an ein weiteres Modul (3),
**dadurch gekennzeichnet, dass** das Verfahren die Schritte aufweist:
- Übertragen eines Referenzsignals (Ref1) vom weiteren Modul (3) an das erste Modul (2a), welches in Abhängigkeit von der zeitlichen Lage der vom weiteren Modul (3) über eine Verbindungsleitung (9a) vom ersten Modul (2a) empfangenen Daten in Bezug auf ein vom weiteren Modul (3) empfangenes Taktsignal (T, TR) gewählt wird.

22. Verfahren nach Anspruch 21, wobei das Referenzsignal (Ref1) eine Bitfolge (B) aufweist, die einer Bitfolge entspricht, die vom weiteren Modul (3) über die Verbindungsleitung (9a) von dem ersten Modul (2a) empfangen wurde.
